# EUROPEAN PATENT APPLICATION

(11) **EP 4 086 783 A1**
(43) Date of publication of application: **09.11.2022**
(21) Application number: 20910717.6
(22) Date of filing: 10.07.2020
(51) Int. Cl.: G06F 16/29

(54) **ELECTRONIC HORIZON CREATION METHOD AND SYSTEM**

(30) Priority: 31.12.2019 CN 201911403157
(71) Applicant: Xiamen Yaxon Networks Co., Ltd., Xiamen, Fujian 361000 (CN)
(72) Inventor: TU, Yankai, Xiamen, Fujian 361000 (CN); LUO, Tengyuan, Xiamen, Fujian 361000 (CN)
(74) Representative: Hofmann, Andreas
(86) International application number: PCT/CN2020/101197
(87) International publication number: WO 2021/135147

(57) **Abstract**

The present disclosure relates to a method and a system for constructing an electronic horizon. The method includes: sending, by at least one roadside unit, its corresponding location information and direction information to a data processing center as road information; constructing, by the data processing center, forward electronic horizon data according to received road information, set search distance and electronic map data; and sending to the roadside unit; receiving and storing, by the roadside unit, the forward electronic horizon data sent by the data processing center; sending, by an on-board unit, a data acquisition request to the roadside unit; sending, by the roadside unit, the forward electronic horizon data corresponding to the direction information in the data acquisition request to the on-board unit; constructing, by the on-board unit, a forward electronic horizon representation according to received forward electronic horizon data. The present disclosure completely avoids using the on-board electronic map in the vehicle's electronic control unit to execute complex search algorithms in the process of constructing the forward electronic horizon representation, and has the advantages of low cost, easy use and high real-time performance.

## Description

### TECHNICAL FIELD

The present disclosure relates to a field of electronic horizon, and in particular, to a method and a system for constructing an electronic horizon.

### BACKGROUND

Electronic horizon is a technology that enables vehicles to have a forward geographic view and predict the road conditions ahead. The existing electronic horizon technology requires the on-board terminal to be equipped with a preset electronic map (such as the patent with the publication no. CN109540162A) or a layer that dynamically acquire the electronic map in the area (such as the patent with publication no. CN109997090A), and then according to the latitude and longitude of vehicle positioning or other information, complex algorithms (such as navigation algorithm, depth search algorithm) are used from the electronic map to search out the road network in front of the vehicle and information such as slope, curvature, congestion, etc. on the road network in real time, and the information is sent on the car bus in the form of bus messages, and provided to each electronic control unit (ECU) of the vehicle for controls of auxiliary energy saving, safety or comfort.

The traditional electronic horizon has the following defects:
1. The vehicle needs to process the preset electronic map; the electronic map for vehicles is charged in units of vehicles, the copyright is expensive, and it requires a large storage space, which increases the cost of the entire system application.
2. The electronic map has a large amount of data, which is inconvenient to upgrade and difficult to apply.
3. On the electronic map, complex algorithms are used to search out the road network ahead from the map in real time, therefore, the amount of calculation is very large and the computational complexity is very high. It takes up a lot of CPU computing resources of the equipment equipped with the electronic horizon system. This will inevitably lead to the use of high-frequency and high-performance CPUs to further increase the cost.

### DISCLOSURE

In order to solve the above problems, the present disclosure proposes a method and a system for constructing an electronic horizon, and the specific solution is as follows:
A method for constructing an electronic horizon, comprising steps of:
sending, by at least one roadside unit, its corresponding location information and direction information to a data processing center as road information;
constructing, by the data processing center, forward electronic horizon data according to received road information, set search distance and electronic map data; and sending to the at least one roadside unit;
receiving and storing, by the at least one roadside unit, the forward electronic horizon data sent by the data processing center;
sending, by an on-board unit, a data acquisition request to the at least one roadside unit;
sending, by the at least one roadside unit, the forward electronic horizon data corresponding to the direction information in the data acquisition request to the on-board unit;
constructing, by the on-board unit, a forward electronic horizon representation according to received forward electronic horizon data.

In an embodiment, according to the location information and the direction information in the road, the data processing center is configured for
searching in the electronic map for all geographic elements that take the location information as a starting point, the direction information as a direction and is included within a distance range in a road where the location information is located; and
constructing the forward electronic horizon data corresponding to the road information according to all searched geographic elements.

In an embodiment, each road information corresponds to one direction information, and each of the at least one roadside unit comprises more than one road information.

In an embodiment, when the forward electronic horizon data needs to be updated, the at least one roadside unit is configured for obtaining the forward electronic horizon data through the data processing center again.

In an embodiment, the at least one roadside unit is configured for determining whether the direction information in the data acquisition request is identical with corresponding direction information of the forward electronic horizon data stored;
if identical, then sending corresponding forward electronic horizon data to the on-board unit;
otherwise, canceling sending.

In an embodiment, the forward electronic horizon data comprises a road data packet, and the road data packet at least comprises a road ID, a forward road length and a main road sign.

In an embodiment, the forward electronic horizon data further comprises a geographic element data packet, and the geographic element data packet at least comprises a geographic element, a road ID to which it belongs, and an offset relative to a starting location of the road.

In an embodiment, when the geographic element is an intersection, the geographic element data packet further comprises road IDs of branches corresponding to the intersection.

In an embodiment, a method for constructing the forward electronic horizon representation comprises steps of:
S1, searching a data packet corresponding to the main road from the road data packet according to the main road signs, and constructing the main road in the forward electronic horizon representation according to the data packet corresponding to the main road;
S2, searching all geographic elements corresponding to the main road from the geographic element data packet according to the road ID corresponding to the main road, and marking them accordingly in the forward electronic horizon representation;
S3, determining whether the geographic elements contains intersections, if so, entering step S4; until all intersections are processed;
S4, searching, for each intersection, the road IDs of all branches corresponding to the intersection from the geographic element data packet;
S5, searching, for the road ID of each branch, the data packet corresponding to the road ID from the road data packet; constructing a branch in the forward electronic horizon representation according to the data packet, and constructing signs for all geographic elements corresponding to the each branch through the geographic element data packet; and
returning to step S3.

In an embodiment, in step S5, a method for constructing the branch is:
constructing a straight line as the branch with a length equal to a length of the forward road in the data packet corresponding to the road ID of the branch, by taking a location of geographic element in the forward electronic horizon representation as the starting location.

In an embodiment, further comprising:
combining, by the on-board unit, the forward electronic horizon representations corresponding to different roadside units;
obtaining, by the on-board unit, the location of a vehicle in the forward electronic horizon representation and a distance between each geographic element and the vehicle according to a positional relationship between the vehicle and each of the at least one roadside unit.

In an embodiment, the method for combining is:
searching for a location of the roadside unit received at a previous moment in the forward electronic horizon representation according to the roadside unit corresponding to the forward electronic horizon representation received at a current moment;
combining two forward electronic horizon representations after the location is taken as the starting location of the main road in the forward electronic horizon representation received at the current moment.

In an embodiment, the driving information of the vehicle comprises a vehicle speed and a driving direction at an intersection;
a location of the vehicle in the forward electronic horizon representation is obtained by calculating an offset from the roadside unit in real time through the vehicle speed;
a road ID when the vehicle is driven behind the intersection is determined by the driving direction at the intersection.

A system for constructing an electronic horizon comprises a data processing center, at least one roadside unit and an on-board unit, and the system implements the steps of the above method according to the embodiments of the present disclosure.

The present disclosure adopts the above technical solution, utilizes V2I infrastructure, stores the processed forward electronic horizon data on each roadside unit, and directly transmits the forward electronic horizon data to the on-board unit of the vehicle passing through the roadside unit through V2I communication, after the vehicle passes through a new roadside unit, the new forward electronic horizon data received will be constructed as the forward electronic horizon representation.

The present disclosure completely avoids the use of the on-board electronic map in the electronic control unit of the vehicle in the process of constructing the forward electronic horizon representation, does not require the electronic control unit to execute complex search algorithms on the electronic map, and has the advantages of low cost, easy use and high real-time performance.

### BRIEF DESCRIPTION OF THE DRAWINGS

FIG. 1 is a flowchart of a first embodiment according to the present disclosure.
FIG. 2 is a schematic diagram showing the construction of the main road in the present embodiment.
FIG. 3 is a schematic diagram showing the geographic element signs in the main road in the present embodiment.
FIG. 4 is a schematic diagram showing the construction of branch 002 in the present embodiment.
FIG. 5 is a schematic diagram showing the geographic element signs in branch 002 in the present embodiment.
FIG. 6 is a schematic diagram showing the construction of the branch 003 in the present embodiment.
FIG. 7 is a schematic diagram showing the geographic element signs in branch 003 in the present embodiment.
FIG. 8 is a schematic diagram showing the vehicle location signs in the present embodiment.
FIG. 9 shows a forward electronic horizon representation of RSU2 constructed in the present embodiment.
FIG. 10 is a schematic diagram showing the combination of the forward electronic horizon representations of RSU1 and RSU2 in the present embodiment.
FIG. 11 is a schematic structural diagram of a system in a second embodiment according to the present disclosure.

### DESCRIPTION OF EMBODIMENTS

To further illustrate the various embodiments, the present disclosure is provided with the accompanying drawings. These drawings are a part of the present disclosure, which are mainly used to illustrate the embodiments, and can be used in combination with the relevant description of the specification to explain the operation principles of the embodiments. With reference to these contents, one of ordinary skill in the art will understand other possible embodiments and advantages of the present disclosure.

The present disclosure will now be further described with reference to the accompanying drawings and specific embodiments.

### First Embodiment:

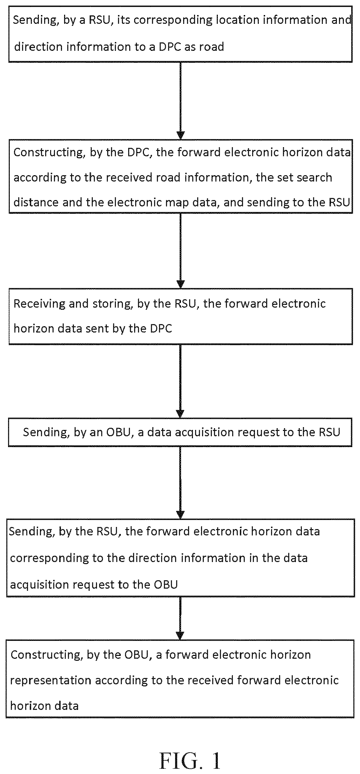

An embodiment of the present disclosure provides a method for constructing an electronic horizon, as shown in FIG. 1, including the following steps:
(1) sending, by at least one roadside unit (RSU), its corresponding location information and direction information to a data processing center (DPC) as road information;

The location information is latitude and longitude location information, which is used to search for the location of the roadside unit corresponding to the location information on the electronic map.

The location information may be acquired from a positioning device such as a GPS (Global Positioning System) installed on the roadside unit.

The direction information may be an absolute road direction, such as an absolute direction value with the true north direction as 0 degrees and the true south direction as 180 degrees; it may also be a relative road direction, such as "the direction of Shenhai Highspeed Line A". A roadside unit can represent one direction information or a plurality of direction information, each direction information may correspond to a separate forward electronic horizon data. For example, a roadside unit represents a plurality of direction information, it should send multiple requests for road information to the data processing center, and each road information corresponds to one direction information.

It should be noted that, in at least one of the embodiments according to the present disclosure, a number of the RSU can be one or more, and preferably, more than one RSU are provided.

(2) constructing, by the data processing center, the forward electronic horizon data according to the received road information, the set search distance and the electronic map data, and sending to the at least one roadside unit;

The forward electronic horizon data may include road data packet and geographic element data packet.

The road data packet may include at least a road ID (RoadID), a forward road length (RoadLen) and a main road sign (MainRoad).

The road ID is a unique identifier. Further, it can be a unique identifier within the search distance range of one roadside unit, and can be repeated within the search distance range of different roadside units.

The main road signs are represented by "0" and "1", "1" represents the main road, and "0" represents not the main road.

The specific structure of the road data packet in the present embodiment is shown in Table 1.

**Table 1**

| Data | RoadID | RoadLen | MainRoad |
|---|---|---|---|
| Description | Road ID | Actual length of the forward road (/m) | Whether it is the main road; 1 is yes; 0 is no |

The content of the above road data packet is only an implementation manner, and in other embodiments, those skilled in the art may add other content to the above at least included content, which is not limited herein.

The geographic element data packet may at least include a geographic element, a road ID to which it belongs, and an offset (Offset) relative to the starting location of the road.

The geographic elements may be other geographic information related to roads, such as roadside units within the search distance range of the roadside unit (specifically, the unique identification code of the roadside unit), gradients, traffic signs (such as deceleration signs, school signs, etc.), intersections, etc.

Since when the geographic element is an intersection, the road ID of the branch corresponding to the intersection needs to be known. Therefore, when the geographic element is an intersection, the geographic element data packet also includes the road ID of the branch corresponding to the intersection.

In the present embodiment, the geographic element data packet is a data structure of indeterminate length. As shown in Table 2, the road ID of the branch corresponding to the intersection is taken as the geographic element as the associated attribute in the intersection data packet. Multiple branches at the same intersection can be set in one and the same data packet, or can be set in different data packets respectively. For multiple geographic elements at the same location (that is, with the same offset relative to the starting location of the road) can be set in the same data packet, they can also be set separately. In the present embodiment, the method of setting in one and the same data packet is adopted, which can facilitate reference and save storage space.

**Table 2**

| Data | RoadID | Offset | AttrNu m | Attr1 | Attr2 | | RaNum | RelateAttr 1 | RelateAttr 2 | |
|---|---|---|---|---|---|---|---|---|---|---|
| Note | Road ID to which it belongs | Offset relative to the starting point of the road | Number of geogra phic element s | Geog raphi c elem ent 1 | Geog raphi c elem ent 2 | | Number of associated attributes | Associated attribute 1 (branchID1) | Associated attribute 2 (branch ID2) | |

The content of the above geographic element data packet is only an implementation manner, and in other embodiments, those skilled in the art may add other content to the above at least included content, which is not limited herein.

The specific method for the data processing center to construct the forward electronic horizon data is as follows: searching, by the data processing center, all geographic elements in the electronic map for the location information on the road where the location information is located according to the location information and direction information in the road information, with the location information as the starting point and the direction information as the direction, and within the distance range; and constructing the forward electronic horizon data corresponding to the road information according to all the searched geographic elements.

(3) receiving and storing, by the roadside unit, the forward electronic horizon data sent by the data processing center;

It should be noted that, in the following cases, the roadside unit needs to update its stored forward electronic horizon data, that is, repeat steps (1) to (3):
a: Road information is updated. For example, the roadside units are rearranged after being replaced, and the corresponding direction information needs to be changed when the road is changed.
b: The forward electronic horizon data stored locally at the roadside unit is missing.
c: Electronic map is updated, that is, the roads or geographic elements on the electronic map are updated.

The above cases are only some specific cases. In other cases that are not mentioned but need to be updated, steps (1) to (3) can also be repeated to update the forward electronic horizon data stored in the roadside unit, which is not limited herein.

(4) sending, by the on-board unit (OBU) a data acquisition request to the roadside unit;

The data acquisition request may include the direction information of the vehicle and the ID of the on-board unit. The ID of the on-board unit is used to distinguish the source of the data acquisition request, and the direction information is used to search the forward electronic horizon data corresponding to the direction information.

(5) sending, by the roadside unit, the forward electronic horizon data corresponding to the direction information in the data acquisition request to the on-board unit;

Since the direction information in the data acquisition request is in a corresponding relationship with the direction information in the forward electronic horizon data, the roadside unit determines whether the direction information in the data acquisition request is the same with the direction information corresponding to the stored electronic horizon data or not. If they are the same, the corresponding forward electronic horizon data is sent to the roadside unit; otherwise, sending is refused.

(6) constructing, by the on-board unit, a forward electronic horizon representation according to the received forward electronic horizon data.

The method for constructing the forward electronic horizon representation may include the following steps:
S1, searching a data packet (MainRoad =1) corresponding to the main road from the road data packet according to the main road signs, and constructing the main road in the forward electronic horizon representation according to the data packet corresponding to the main road;
   There is one and only one data packet corresponding to the main road in the road data packet. The method for constructing the main road according to the data packet is: constructing a straight line as a main road with a length equal to a length of the forward road according to the forward road length (RoadLen) in the data packet.
S2, searching all geographic elements corresponding to the main road from the geographic element data packet according to the road ID corresponding to the main road, and marking them accordingly in the forward electronic horizon representation;
S3, determining whether the geographic elements contains intersections, if so, entering step S4; until all intersections are processed;
S4, searching, for each intersection, the road IDs of all branches corresponding to the intersection from the geographic element data packet;
S5, searching, for the road ID of each branch, the data packet corresponding to the road ID from the road data packet; constructing a branch in the forward electronic horizon representation according to the data packet, and constructing signs for all geographic elements corresponding to the each branch through the geographic element data packet; and
returning to step S3.

The method for constructing the branch is as follows: constructing a straight line as the branch with a length equal to a length of the forward road in the data packet corresponding to the road ID of the branch, by taking a location of geographic element in the forward electronic horizon representation as the starting location.

The signs of the geographic elements are constructed using the construction method in step S2.

Through the repeated construction of steps S3 to S5, the construction of branches can be continuously performed until all branches within the search distance range corresponding to the roadside unit are constructed.

The following is a concrete case to illustrate the method for constructing the forward electronic horizon representation.

The road data packets are: L1={001, 500, 1}, L2={002, 400, 0}, L3={003, 100, 0}.

The geographic element data packets are: G1={001, 0, 1, RSU1_ID}, G2={001, 300, 1, RSU2_ID}, G3={002, 200, 1, RSU3_ID}, G4={001, 100, 1, Intersection 1, 1, 002}, G5={001, 400, 1, Intersection 2, 1, 003}, G6={001, 150, 1, Watch out for pedestrians}, G7={001, 200, 1, Steep slope}, G8={003, 50,1, RSU4_ID}.

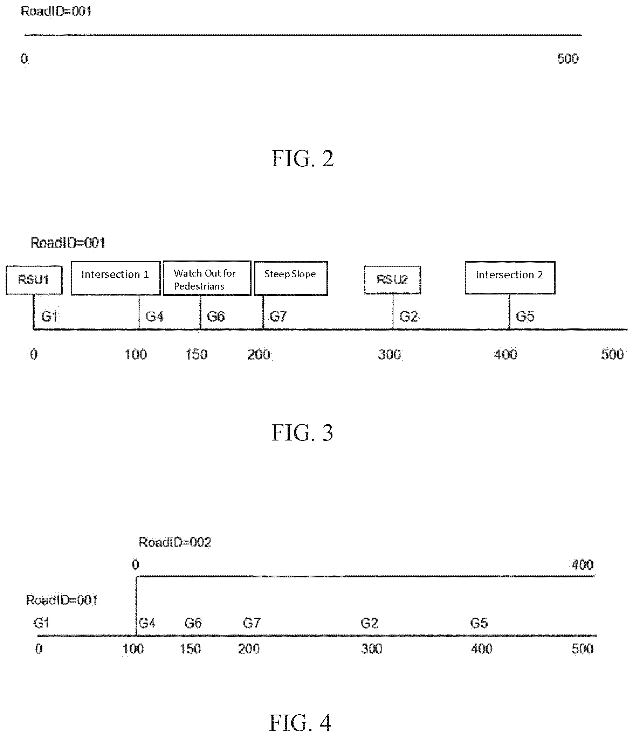

Step 1: constructing a straight line as the main road with a length of 500; as shown in FIG. 2, since the main road flag in the data packet L1 is "1", the data packet L1 corresponds to the main road, the length of the forward road in it is 500, and the road ID is 001.

Step 2: searching the data packets with the road ID=001 from the geographic element data packet according to the road ID=001 corresponding to the main road, denoted as G1, G2, G4, G5, G6, G7 respectively; marking the geographic element corresponding to each data packet at a location offset by the offset relative to the starting location of the main road, according to the offset Offset corresponding to each data packet. As shown in FIG. 3, the RSU1, Intersection 1, Watch out for pedestrians, Steep slopes, RSU2, Intersection 2 in the block are the geographic elements corresponding to the G1, G4, G6, G7, G2, G5 data packets respectively. 0, 100, 150, 200, 300, 400 below the line are offsets corresponding to G1, G4, G6, G7, G2, G5 data packets, respectively.

Step 3: constructing the geographic element signs of branchs for these two intersections respectively, since the geographic elements contain two intersections, namely Intersection 1 and Intersection 2;

Step 4: constructing branches at Intersection 1;

The geographic element data packet corresponding to Intersection 1 is G4, and the road ID of the branch corresponding to Intersection 1 is searched from G4 as 002, and the data packet with road ID=002 from the road data packet is L2, and the corresponding road length in L2 is 400. Therefore, the length of the straight line corresponding to the branch is 400. Taking the geographic element, that is, the location of the Intersection 1 as the starting location, a straight line with a length of 400 is constructed as Branch 002, as shown in FIG. 4.

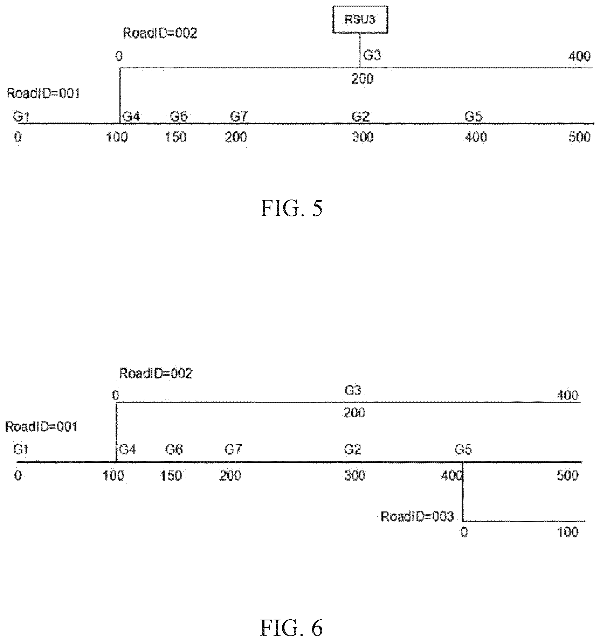

Step 5: searching the data packet with the road ID=002 from the geographic element data packet as G3, according to the road ID=002; marking the geographic element RSU3_ID corresponding to G3 at a location offset by 200 from the starting location of Branch 002, according to the corresponding offset Offset=200 in G3. As shown in FIG. 5, RSU3 in the block is the geographic element corresponding to G3, 200 below the line is the offset corresponding to the geographic element RSU3.

The geographic elements corresponding to Branch 002 do not include intersections, so the construction of the branch at Intersection 1 and the geographic element signs on it are completed.

Step 6: constructing branches at Intersection 2;

The methods for constructing Intersection 2 and Intersection 1 are the same. The geographic element data packet corresponding to Intersection 2 is G5. The road ID of the branch corresponding to Intersection 2 is searched from G5 as 003, and the data packet with road ID=003 is searched from the road data packet is L3, and the length of the corresponding road in L3 is 100. Therefore, the length of the straight line corresponding to the branch is 100. Taking the geographic element, that is, the location of Intersection 2 as the starting location, a straight line with a length of 100 is constructed as Branch 003, as shown in FIG. 6.

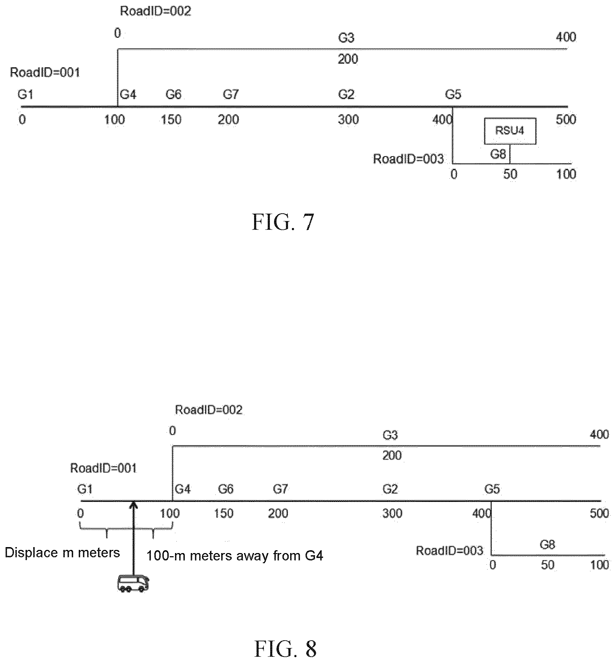

Step 7: searching the data packet with the road ID=002 from the geographic element data packet as G8, according to the road ID=003; marking the geographic element RSU4_ID corresponding to G8 at a location offset by 50 relative to the starting location of Branch 003, according to the corresponding offset Offset=50 in G8. As shown in FIG. 7, RSU4 in the block is the corresponding geographic element corresponding to G8, 50 below the line is the offset corresponding to the geographic element RSU4.

The geographic elements corresponding to Branch 003 do not contain intersections, so the construction of the branch at Intersection 2 and the geographic element signs on it are completed.

To sum up, the construction of the forward electronic horizon representation corresponding to the roadside unit is completed according to the forward electronic horizon data corresponding to the roadside unit.

In addition, during the use of the forward electronic horizon representation, since the vehicle is constantly moving, its position in the forward electronic horizon representation is constantly changing. When moving to the vicinity of a new roadside unit, the new forward electronic horizon representation constructed by the forward electronic horizon data corresponding to the received new roadside unit is combined/merged with the old forward electronic horizon representation to realize continuous updating.

Therefore, the system also includes:
The forward electronic horizon representations corresponding to different roadside units are combined by the on-board unit.

The combining method is: searching for a location in the forward electronic horizon representation received by the roadside unit at a previous moment according to the roadside unit corresponding to the forward electronic horizon representation received at the current moment; and combining the two forward electronic horizon representations after taking the location as the starting location of the main road in the forward electronic horizon representation received at the current moment.

According to the positional relationship between the vehicle and the roadside unit and the driving information of the vehicle, the on-board unit obtains the location of the vehicle in the forward electronic horizon representation, and then obtains the distance between each geographic element and the vehicle.

The driving information of the vehicle may include the vehicle speed and the driving direction at the intersection.

The vehicle speed can be collected by a vehicle speed sensor, a vehicle instrument or other sensors, etc. The driving direction at the intersection can be judged from the information collected by the steering wheel angle sensor of the vehicle, the direction information of the positioning system or the gyroscope, etc., to determine the road ID of the vehicle after driving at the intersection, that is, it is determined that whether the vehicle continues to drive on the main road or turns to a branch at the intersection.

Since the forward electronic horizon representation is an abstract representation constructed, the location of the vehicle in the forward electronic horizon representation cannot be determined by the coordinate positioning of the geographic location, and it can only be approximated by means of offset. Therefore, when the locations of the on-board unit and the roadside unit are the closest, the offset of the vehicle from the roadside unit on the forward electronic horizon representation is set to 0, and the driving distance is calculated according to the vehicle speed, and then the location of the vehicle on the forward electronic horizon representation can be determined in real time, in order to display the information of the forward electronic horizon representation of the forward road of the vehicle.

Assuming that the vehicle travels forward m meters from the roadside unit, the location of the vehicle in the forward electronic horizon representation is the location with an offset of m from the roadside unit, that is, only the information of the forward electronic horizon representation of the forward road with an offset greater than m meters is provided.

Examples are given below for explaining.

As shown in FIG. 8, the vehicle turns to Branch 002 at Intersection 1 (G4), and when approaching RSU2 (G2), the on-board unit receives the new forward electronic horizon data sent by RSU2, namely
road packet: L4 = {001, 500, 1}; geographic element packet: G9={001, 0, 1, RSU2_ID}, geographic element packet: G10={001, 350, 1, RSU5_ID}.

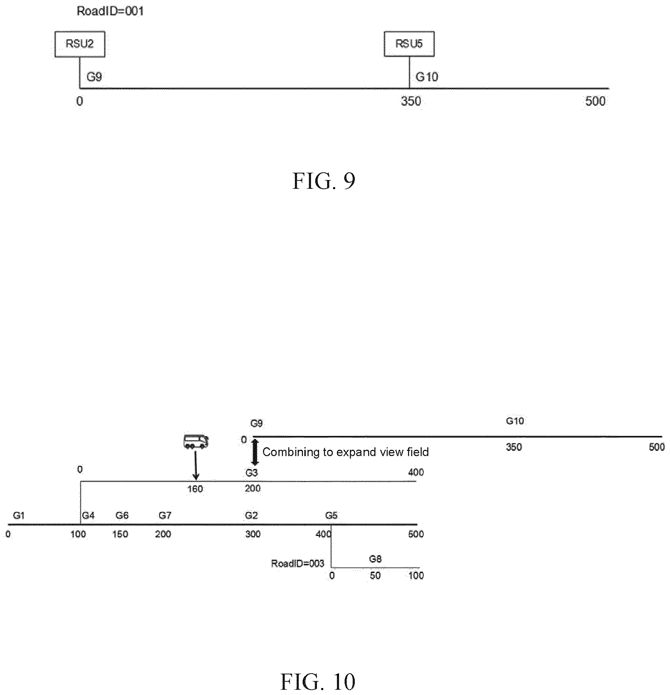

The forward electronic horizon representation constructed by the on-board unit according to the new forward electronic horizon data sent by the RSU2 is shown in FIG. 9.

According to the identification code of the roadside unit, G3 and G9 represent the same roadside unit, that is, RSU2. Therefore, the two forward electronic horizon representations are combined at RSU2 to expand the field of view, as shown in FIG. 10.

After combining, the on-board unit calculates the offset value of the next geographic element RSU5 (G10) and the vehicle: the offset value of RSU2 is 200, minus the current offset value of the vehicle 160, plus the offset value of RSU5 350: 200-160+350 = 390 meters.

When the vehicle travels to the RSU2's location, the RSU2's location is set as the starting location, that is, the offset value is 0, and the view before the RSU2's location is deleted.

In this way, by continuously combining the forward electronic horizon representation of new roadside units, the field of view can be expanded and updated, and the function of predicting the forward road and geographic elements can be realized, avoiding complex map search algorithms in traditional electronic maps.

The first embodiment of the present disclosure utilizes the V2I (vehicle-to-infrastucture communication) infrastructure to store the processed forward electronic horizon data on each roadside unit, and sends directly the forward electronic horizon data to the on-board unit of the vehicle passing through the roadside unit through V2I communication. After the vehicle passes a new roadside unit, the received new forward electronic horizon data is constructed as a forward electronic horizon representation that, and then, is adopted to be combined with the forward electronic horizon representation received and constructed by the previous roadside unit for extending. By accumulating relative displacements, the location of the vehicle on the forward electronic horizon representation and the relative positional relationship between the vehicle and each geographic element are determined. In this way, in the electronic horizon system, the use of the on-board electronic map in the electronic control unit of the vehicle is completely avoided, and the electronic control unit is not required to execute a complex search algorithm on the electronic map, which has the advantages of low cost, easy use and high real-time performance.

### Second Embodiment:

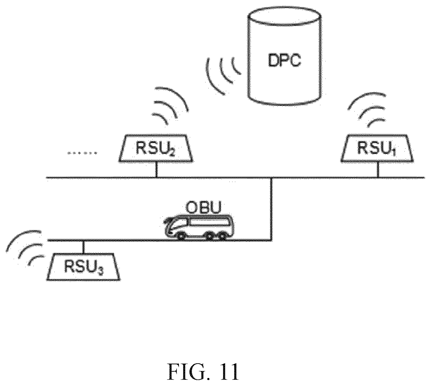

The present disclosure also provides a system for constructing an electronic horizon, as shown in FIG. 11, including a data processing center, at least one roadside unit and an on-board unit.

The data processing center is a central processing server that can carry complex algorithms, and can communicate with roadside units through wired communication or long-distance wireless communication.

Each roadside unit has a unique identification code (ID) by which it is identified. The roadside unit communicates with the data processing center by means of wired communication or long-distance wireless communication.

The on-board unit is installed on the vehicle and communicates with the roadside unit through V2I short-range wireless communication.

The system implements the steps in the above method described in the first embodiment.

Although the present disclosure has been particularly shown and described in connection with preferred embodiments, it will be understood by those skilled in the art that all various changes in form and detail made to the present disclosure without departing from the spirit and scope of the disclosure as defined by the appended claims fall within the protection scope of the present disclosure.

## Claims

1. A method for constructing an electronic horizon, **characterized in that**: the method comprises steps of:
sending, by at least one roadside unit, its corresponding location information and direction information to a data processing center as road information;
constructing, by the data processing center, forward electronic horizon data according to received road information, set search distance and electronic map data; and sending to the at least one roadside unit;
receiving and storing, by the at least one roadside unit, the forward electronic horizon data sent by the data processing center;
sending, by an on-board unit, a data acquisition request to the at least one roadside unit;
sending, by the at least one roadside unit, the forward electronic horizon data corresponding to the direction information in the data acquisition request to the on-board unit;
constructing, by the on-board unit, a forward electronic horizon representation according to received forward electronic horizon data.

2. The method for constructing an electronic horizon according to claim 1, **characterized in that**:
according to the location information and the direction information in the road, the data processing center is configured for
searching in the electronic map for all geographic elements that take the location information as a starting point, the direction information as a direction and is included within a distance range in a road where the location information is located; and
constructing the forward electronic horizon data corresponding to the road information according to all searched geographic elements.

3. The method for constructing an electronic horizon according to claim 1, **characterized in that**: each road information corresponds to one direction information, and each of the at least one roadside unit comprises more than one road information.

4. The method for constructing an electronic horizon according to claim 1, **characterized in that**: when the forward electronic horizon data needs to be updated, the at least one roadside unit is configured for obtaining the forward electronic horizon data through the data processing center again.

5. The method for constructing an electronic horizon according to claim 1, **characterized in that**: the at least one roadside unit is configured for determining whether the direction information in the data acquisition request is identical with corresponding direction information of the forward electronic horizon data stored;
if identical, then sending corresponding forward electronic horizon data to the on-board unit;
otherwise, canceling sending.

6. The method for constructing an electronic horizon according to claim 1, **characterized in that**: the forward electronic horizon data comprises a road data packet, and the road data packet at least comprises a road ID, a forward road length and a main road sign.

7. The method for constructing an electronic horizon according to claim 6, **characterized in that**: the forward electronic horizon data further comprises a geographic element data packet, and the geographic element data packet at least comprises a geographic element, a road ID to which it belongs, and an offset relative to a starting location of the road.

8. The method for constructing an electronic horizon according to claim 7, **characterized in that**: when the geographic element is an intersection, the geographic element data packet further comprises road IDs of branches corresponding to the intersection.

9. The method for constructing an electronic horizon according to claim 8, **characterized in that**: a method for constructing the forward electronic horizon representation comprises steps of:
S1, searching a data packet corresponding to the main road from the road data packet according to the main road signs, and constructing the main road in the forward electronic horizon representation according to the data packet corresponding to the main road;
S2, searching all geographic elements corresponding to the main road from the geographic element data packet according to the road ID corresponding to the main road, and marking them accordingly in the forward electronic horizon representation;
S3, determining whether the geographic elements contains intersections, if so, entering step S4; until all intersections are processed;
S4, searching, for each intersection, the road IDs of all branches corresponding to the intersection from the geographic element data packet;
S5, searching, for the road ID of each branch, the data packet corresponding to the road ID from the road data packet; constructing a branch in the forward electronic horizon representation according to the data packet, and constructing signs for all geographic elements corresponding to the each branch through the geographic element data packet; and
returning to step S3.

10. The method for constructing an electronic horizon according to claim 9, **characterized in that**: in step S5, a method for constructing the branch is:
constructing a straight line as the branch with a length equal to a length of the forward road in the data packet corresponding to the road ID of the branch, by taking a location of geographic element in the forward electronic horizon representation as the starting location.

11. The method for constructing an electronic horizon according to claim 1, **characterized in that**:
further comprising:
combining, by the on-board unit, the forward electronic horizon representations corresponding to different roadside units;
obtaining, by the on-board unit, the location of a vehicle in the forward electronic horizon representation and a distance between each geographic element and the vehicle according to a positional relationship between the vehicle and each of the at least one roadside unit and driving information of the vehicle.

12. The method for constructing an electronic horizon according to claim 11, **characterized in that**: the method for combining is:
searching for a location of the roadside unit received at a previous moment in the forward electronic horizon representation according to the roadside unit corresponding to the forward electronic horizon representation received at a current moment;
combining two forward electronic horizon representations after the location is taken as the starting location of the main road in the forward electronic horizon representation received at the current moment.

13. The method for constructing an electronic horizon according to claim 11, **characterized in that**: the driving information of the vehicle comprises a vehicle speed and a driving direction at an intersection;
a location of the vehicle in the forward electronic horizon representation is obtained by calculating an offset from the roadside unit in real time through the vehicle speed;
a road ID when the vehicle is driven behind the intersection is determined by the driving direction at the intersection.

14. A system for constructing an electronic horizon, **characterized in that**: the system comprises a data processing center, at least one roadside unit and an on-board unit, and the system implements the steps of the method according to any one of claims 1 to 13.
